(19) Europäisches Patentamt / European Patent Office / Office européen des brevets

(11) **EP 4 422 091 B1**

(12) **EUROPEAN PATENT SPECIFICATION**

(45) Date of publication and mention
of the grant of the patent:
**05.11.2025  Bulletin 2025/45**

(21) Application number: **22882722.6**

(22) Date of filing: **12.10.2022**

(51) International Patent Classification (IPC):
*H04L 27/02* (2006.01)     *H04B 10/524* (2013.01)
*H04B 10/61* (2013.01)     *H04B 10/66* (2013.01)
*H04L 27/04* (2006.01)     *H04B 1/7176* (2011.01)
*H04B 14/02* (2006.01)

(52) Cooperative Patent Classification (CPC):
**H04L 27/04; H04B 1/7176; H04B 10/524;
H04B 10/61; H04B 10/66; H04B 14/023;
H04B 14/026**

(86) International application number:
**PCT/CN2022/124910**

(87) International publication number:
**WO 2023/066112 (27.04.2023 Gazette 2023/17)**

(54) **INFORMATION BIT MODULATION METHOD, INFORMATION BIT DEMODULATION METHOD, DEVICE, AND STORAGE MEDIUM**

INFORMATIONSBITMODULATIONSVERFAHREN,
INFORMATIONSBITDEMODULATIONSVERFAHREN, VORRICHTUNG UND SPEICHERMEDIUM

PROCÉDÉ DE MODULATION DE BITS D'INFORMATION, PROCÉDÉ DE DÉMODULATION DE
BITS D'INFORMATION, DISPOSITIF, ET SUPPORT DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.10.2021  CN 202111224627**

(43) Date of publication of application:
**28.08.2024  Bulletin 2024/35**

(73) Proprietor: **Vivo Mobile Communication Co., Ltd.
Dongguan, Guangdong 523863 (CN)**

(72) Inventors:
• **HUANG, Wei**
  **Dongguan, Guangdong 523863 (CN)**
• **JIANG, Dajie**
  **Dongguan, Guangdong 523863 (CN)**
• **SHEN, Xiaodong**
  **Dongguan, Guangdong 523863 (CN)**

(74) Representative: **Shieldmark**
**P.O. Box 90471**
**2509 LL The Hague (NL)**

(56) References cited:
WO-A1-2006/073371     WO-A1-2006/073371
CN-A- 105 245 286     CN-A- 111 049 586
CN-A- 112 019 295     CN-A- 113 422 788
US-A1- 2005 175 068     US-A1- 2014 072 063

• **BAO JINGJING, ZHAN HONGLIN: "The Study of
Generalized Spatial Modulation Based on
MPAPM Signals in Indoor Visible Light
Communication System", 2020 IEEE EURASIA
CONFERENCE ON IOT, COMMUNICATION AND
ENGINEERING (ECICE), 1 October 2020
(2020-10-01), pages 82 - 84, XP093058920, DOI:
10.1109/ECICE50847.2020.9301969**

## Description

### CROSS-REFERENCE TO RELATED APPLICATIONS

This application claims priority to Chinese Patent Application No. 202111224627.1, filed in China on October 19, 2021.

### TECHNICAL FIELD

This application pertains to the field of communication technologies, and specifically relates to an information bit modulation method, a demodulation method, a device, and a storage medium.

### BACKGROUND

Currently, a modulation method supported by a communication system mainly includes pulse amplitude modulation (Pulse Amplitude Modulation, PAM) and pulse position modulation (Pulse Position Modulation, PPM). The PAM is a modulation manner in which an amplitude of a pulse carrier changes with a baseband signal, that is, an information bit is modulated to a pulse amplitude. The PPM is a modulation manner in which a position of the pulse carrier changes with the baseband signal, that is, the information bit is modulated to a pulse position. In this way, because the PAM only modulates the information bit to the pulse amplitude, and the PPM only modulates the information bit to the pulse position, a band utilization rate of information bit modulation is low. CN113422788A discloses a high-confidentiality financial data processing system, which solves the technical problem of low confidentiality, and comprises a data confidentiality processing unit, wherein the data confidentiality processing unit comprises a sub-mapping unit, a pulse amplitude modulation confidentiality algorithm unit and a pulse position modulation confidentiality algorithm unit which are connected with the sub-mapping unit; the data security processing unit also comprises a matrix type data receiving unit corresponding to the matrix type data transmitting unit, and the matrix type data receiving unit is connected with the joint demodulation unit. US2005/175068A1 discloses a method that eliminates spectral lines and shapes the power spectral density of an ultra bandwidth signal. First, a train of pulses is generated. The pulses are then modulated in time according to symbols. A polarity of the pulses is inverted randomly before transmitting the pulses as an ultra wide bandwidth signal. US2014/072063A1 discloses a communication method including: receiving input data at a transmitter, the transmitter including at least one convolutional encoder and at least one modulator; applying the input data to a trellis-coded modulation (TCM) scheme to encode the input data and produce one or more TCM symbols representing the encoded data; applying the one or more TCM symbols to a second modulation scheme, the second modulation scheme including a pulse modulation in combination with an additional modulation; and generating one or more modulation symbols representing the encoded data based on the second modulation scheme. WO2006/073371A1 discloses a method and apparatus for constructing a pulse mapping table for Impulse radio pulses modulated with respect to n pulse parameters, $n \geq 1$. The method comprises identifying all possible pulses for a given modulation scheme; and assigning m binary bits, $m \geq 2$, to each pulse in a manner such that a Hamming distance between neighbouring pulses with respect to each of the n pulse parameters is larger than 1.

### SUMMARY

Embodiments of this application provide an information bit modulation method, a demodulation method, a device, and a storage medium, to resolve a problem that a band utilization rate of information bit modulation is low.

The invention is set out in the appended set of claims.

In embodiments of this application, the transmit end modulates the information bit to the pulse quantity, the pulse position permutation and combination, and the pulse amplitude, to generate the corresponding modulation symbol. The transmit end transmits the modulation symbol. In this way, the information bit is supported to be modulated to the pulse quantity, the pulse position permutation and combination, and the pulse amplitude, to improve a band utilization rate of information bit modulation.

### BRIEF DESCRIPTION OF DRAWINGS

FIG. 1 shows a block diagram of a wireless communication system to which embodiments of this application may be applied;
FIG. 2 is a flowchart of an information bit modulation method according to an embodiment of this application;
FIG. 3 is a schematic diagram of information bit modulation according to an embodiment of this application;
FIG. 4 is a flowchart of an information bit demodulation method according to an embodiment of this application;
FIG. 5 is a diagram of a structure of an information bit modulation apparatus according to an embodiment of this application;
FIG. 6 is a diagram of a structure of an information bit demodulation apparatus according to an embodiment of this application;
FIG. 7 is a diagram of a structure of a communication device according to an embodiment of this application;

FIG. 8 is a diagram of a structure of a transmit end according to an embodiment of this application; and FIG. 9 is a diagram of a structure of a receive end according to an embodiment of this application.

## DESCRIPTION OF EMBODIMENTS

The following clearly describes technical solutions in embodiments of this application with reference to accompanying drawings in embodiments of this application. The invention is defined by the appended claims.

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and claims, "and/or" represents at least one of connected objects, and a character "/" generally represents an "or" relationship between associated objects.

It is worth noting that the technology described in embodiments of this application is not limited to a long term evolution (Long Term Evolution, LTE)/LTE-Advanced (LTE-Advanced, LTE-A) system, but may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in embodiments of this application are usually used interchangeably, and the described technology may be applied not only to the systems and radio technologies mentioned above, but also to other systems and radio technologies. In the following descriptions, a new radio (New Radio, NR) system is described for an example purpose, and NR terms are used in most of the following descriptions. These technologies may alternatively be applied to applications other than NR system applications, for example, a 6th generation (6th Generation, 6G) communication system.

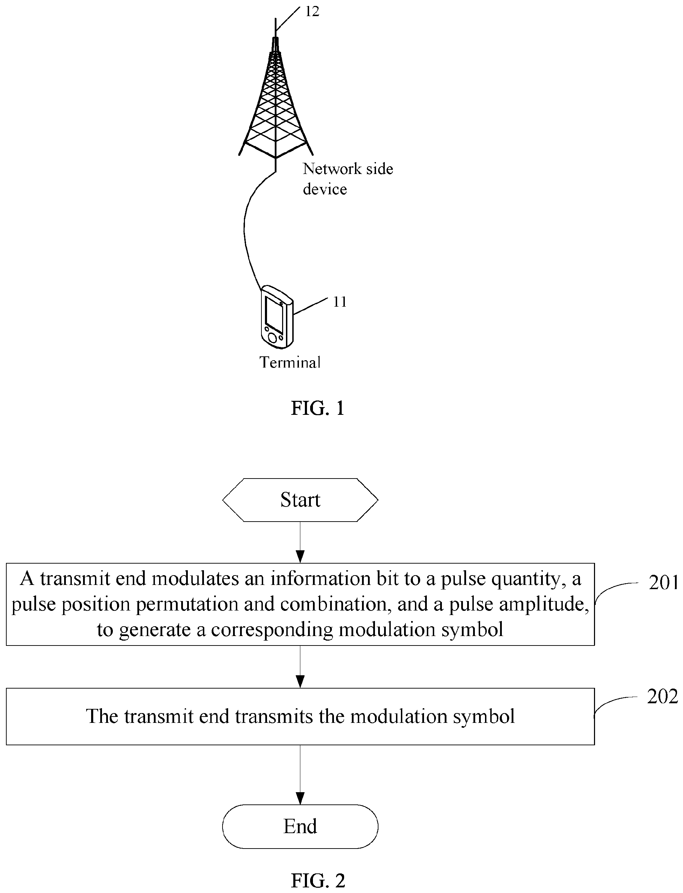

FIG. 1 shows a block diagram of a wireless communication system to which embodiments of this application may be applied. The wireless communication system includes a terminal 11 and a network side device 12.

The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), an in-vehicle device (Vehicle User Equipment, VUE), pedestrian user equipment (Pedestrian User Equipment, PUE), or a smart home (a home device with a wireless communication function, such as a refrigerator, a television, a washing machine, or furniture). The wearable device includes: a smart watch, a smart band, a smart headset, smart glasses, smart jewelry (a smart bracelet, a smart hand chain, a smart ring, a smart necklace, a smart anklet, a smart ankle chain), a smart wristband, smart clothing, a game machine, and the like. It should be noted that a specific type of the terminal 11 is not limited in embodiments of this application.

The network side device 12 may be a core network element or a base station, and the core network element may be an access and mobility management function (Access and Mobility Management Function, AMF), a mobility management entity (Mobility Management Entity, MME), or the like. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or another appropriate term in the art. As long as the same technical effect is achieved, the base station is not limited to a specific technical term. It should be noted that a base station in an NR system is taken only as an example in embodiments of this application, but a specific type of the base station is not limited.

With reference to the accompanying drawings, the following describes in detail, by using some embodiments and application scenarios thereof, an information bit modulation method, a demodulation method, a device, and a storage medium provided in embodiments of this application.

In embodiments of this application, a transmit end is a terminal, and a receive end is a network side device. Alternatively, a transmit end is a network side device, and a receive end is a terminal. Alternatively, a transmit end is a terminal, and a receive end is a terminal. Alternatively, a transmit end is a network side device, and a receive end is a network side device.

In embodiments of this application, a communication manner between the transmit end and the receive end includes but is not limited to backscatter communication, laser communication, optical wireless communication, visible light communication, and the like, and may be specifically applied to various communication systems such as an intensity modulation-direct detection (Intensity Modulation-Direct Detection, IM-DD) communication system, a cellular system, a Wi-Fi system, a sidelink system, an optical wireless communication system, and a backscatter communication system.

FIG. 2 is a flowchart of an information bit modulation method according to an embodiment of this application. As shown in FIG. 2, the method includes the following steps.

Step 201: A transmit end modulates an information bit to a pulse quantity, a pulse position permutation and combination, and a pulse amplitude, to generate a corresponding modulation symbol.

In this embodiment of this application, modulating the information bit to the pulse quantity, the pulse position permutation and combination, and the pulse amplitude may also be understood as separately mapping the information bit to the pulse quantity, the pulse position permutation and combination, and the pulse amplitude. In this way, information bit modulation is implemented in three dimensions: a pulse quantity dimension, a pulse position permutation and combination dimension, and a pulse amplitude dimension. For example, three parts of bits of the information bit are separately modulated to the pulse quantity, the pulse position permutation and combination, and the pulse amplitude.

In one implementation, the information bit is mapped stepwise to the pulse quantity, the pulse position permutation and combination, and the pulse amplitude. Specifically, the transmit end generates or determines the information bit, and divides the information bit into three parts. A first part of the information bit is mapped to the pulse quantity. A second part of the information bit is mapped to the pulse position permutation and combination. A third part of the information bit is mapped to the pulse amplitude.

In another implementation, the information bit may be directly mapped to the pulse quantity, the pulse position permutation and combination, and the pulse amplitude.

It should be noted that, in this embodiment of this application, a mapping manner between the information bit and the pulse quantity, the pulse position permutation and combination, and the pulse amplitude is not limited, and may alternatively be another mapping manner in addition to stepwise mapping and direct mapping.

The pulse quantity may represent a quantity of pulses in one time domain resource unit. The pulse position permutation and combination may represent a position permutation and combination of the pulse in one time domain resource unit. The pulse amplitude may represent an amplitude of the pulse in the time domain resource unit.

In this embodiment of this application, the modulation manner of modulating the information bit to the pulse quantity, the pulse position permutation and combination, and the pulse amplitude may be referred to as flexible multiple pulse amplitude position modulation (Flexible Multiple Pulse Amplitude Position Modulation, F-MPAPM).

It should be noted that in this embodiment of this application, modulating the information bit to the pulse quantity, the pulse position permutation and combination, and the pulse amplitude to generate the corresponding modulation symbol may also be understood as modulating, by using first modulation, the information bit to generate the modulation symbol. The first modulation is a modulation manner based on the pulse quantity, the pulse position, and the pulse amplitude.

Step 202: The transmit end transmits the modulation symbol.

That the transmit end transmits the modulation symbol may mean that the transmit end directly sends the modulation symbol, or may mean that the transmit end adds other information after symbol modulation and then performs sending, or the transmit end performs sending after performing other signal processing. This is not limited herein.

In this embodiment of this application, through the foregoing steps, the information bit may be modulated to the pulse quantity, the pulse position permutation and combination, and the pulse amplitude, to improve a band utilization rate of information bit modulation. In addition, because more information bits are modulated at one time, modulation with high power efficiency can be further implemented.

In an optional implementation, in one first time domain resource unit, the pulse quantity carries $\log_2 n$ bits of the information bit, the pulse position permutation and combination carries $\log_2 C_M^n$ bits of the information bit, and the pulse amplitude carries $n \cdot \log_2 L$ bits of the information bit.

n is a pulse quantity, of the modulation symbol, in the one first time domain resource unit. L is an amplitude modulation order supported by each pulse. M is a quantity of second time domain resource units included in the one first time domain resource unit. n, L, and M are positive integers.

The first time domain resource unit may be a frame, a subframe, a slot, or the like. The second time domain resource unit may be a subframe, a slot, a subslot, a symbol, or the like. That the pulse amplitude carries $n \cdot \log_2 L$ bits of the information bit means that pulse amplitudes of n pulses in the one first time domain resource unit may carry $n \cdot \log_2 L$ bits, that is, one pulse may carry $\log_2 L$ bits.

The following uses an example in which the first time domain resource unit is a frame and the second time domain resource unit is a slot for description.

A pulse quantity in each frame may be flexibly designed, so that the pulse quantity in each frame is variable, and pulse quantity information may be used for bit information mapping. If it is assumed that there are M slots and a maximum of n ($1 \leq n \leq M$) pulses in one frame, the pulse quantity $i \in \{1, 2 \cdots, n\}$ in one frame may represent $\log_2 n$ bits. If $n = M$, the pulse quantity $i$ ($1 \leq i \leq M$) in each frame may represent $\log_2 M$ bits.

On the foregoing basis, it is determined that there are *n* pulses in *M* slots in one frame. In this way, a relative position permutation and combination of the n pulses is designed, where each pulse position permutation and combination can be used to carry the information bit.

For example, the *n* pulses are sent in the *M* slots, and a quantity of permutations and combinations of the *n* pulses is $C_M^n = \frac{M!}{n!(M-n)!}$.

In this way, the pulse position permutation and combination of the n pulses in each frame may carry $\log_2 C_M^n$ bits.

On the foregoing basis, amplitudes of the n pulses in one frame are further controlled, to further carry the information bit. Assuming that each pulse supports L-order amplitude modulation, an amplitude of each pulse may carry $\log_2 L$ bits, and amplitude information of the n pulses in each frame may carry $n \cdot \log_2 L$ bits.

In this implementation, $\log_2 n + \log_2 C_M^n + n \cdot \log_2 L$ bits may be carried in the one first time domain resource unit by using the quantity, the position permutation and combination, and the amplitudes of the n pulses, to improve a band utilization rate and modulation efficiency.

In an optional implementation, that a transmit end modulates an information bit to a pulse quantity, a pulse position permutation and combination, and a pulse amplitude includes:
The transmit end modulates a first part of bits of the information bit to the pulse quantity.

The transmit end modulates a second part of bits of the information bit to the pulse position permutation and combination.

The transmit end modulates a third part of bits of the information bit to the pulse amplitude.

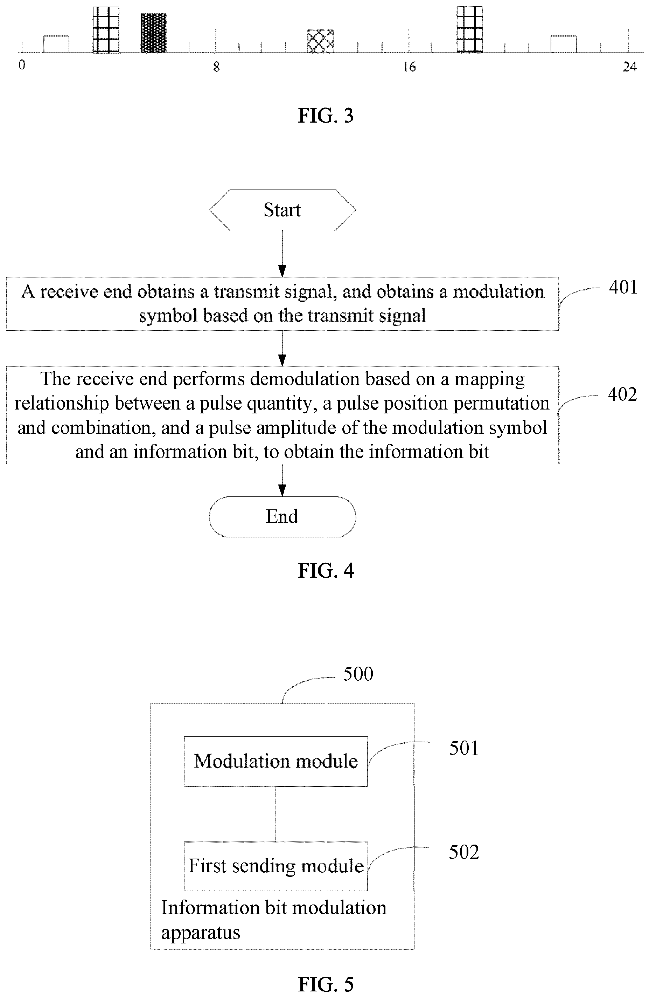

The first part of bits, the second part of bits, and the third part of bits may be sequentially modulated to the pulse quantity, the pulse position permutation and combination, and the pulse amplitude. Alternatively, a direct mapping relationship between the information bit and {the pulse quantity, the pulse position permutation and combination, and the pulse amplitude} may be controlled, to perform signal mapping on the first part of bits, the second part of bits, and the third part of bits. For example, FIG. 3 is used as an example. One frame includes eight slots, that is, M=8. A first frame includes three pulses. Amplitude orders of the three pulses are respectively 1, 4, and 3. In this case, a pulse quantity in the first frame is 3, and the three pulses in the first frame are at an eleventh relative position of 56 relative position permutations and combinations of the three pulses in the eight slots. Therefore, for the first frame, the information bit may be directly mapped based on a direct mapping relationship between the information bit and {3, 11, {1, 4, 3}}.

In this implementation, the first part of bits, the second part of bits, and the third part of bits of the information bit may be sequentially modulated to the pulse quantity, the pulse position permutation and combination, and the pulse amplitude

In an optional implementation, a pulse quantity of the modulation symbol is the pulse quantity in the one first time domain resource unit.

A pulse position permutation and combination of the modulation symbol is a position permutation and combination, of a pulse in the one first time domain resource unit, in the first time domain resource unit.

A pulse amplitude of the modulation symbol is an amplitude of each pulse in the one first time domain resource unit.

FIG. 3 is still used as an example. The pulse quantity of the first frame is 3. The pulse is at an eleventh phase position of 56 relative position permutations and combinations of one pulse in the eight slots, that is, the position permutation and combination is represented as 11, and the pulse amplitude is represented as 1, 4, 3. A pulse quantity of a second frame is 1, and a pulse is at a fifth relative position of eight relative position permutations and combinations of the one pulse in the eight slots, that is, the position permutation and combination is represented as 5, and the pulse amplitude is represented as 2. A pulse quantity of a third frame is 2, and two pulses are at a twelfth relative position of 28 relative position permutations and combinations of the two pulses in the eight slots, that is, the position permutation and combination is represented as 12, and the pulse amplitude is represented as 4, 1.

In an optional implementation, the method further includes:

The transmit end sends indication information. The indication information indicates at least one of the following:

    the quantity of second time domain resource units in the one first time domain resource unit;
    a maximum quantity of pulses in the one first time domain resource unit; and
    the amplitude modulation order supported by the pulse.

At least one of the foregoing three items may be defined in a protocol or configured on a network side, or communicated to a receive end by using the indication information.

The indication information may be carried in one of the following:
downlink control information (Downlink Control Information, DCI), sidelink control information (Sidelink Control Information, SCI), and a preamble in a Wi-Fi physical frame (Physical preamble, PHY preamble).

In this implementation, the transmit end sends, to the receive end, a signal modulated through F-MPAPM, and notifies, by using the indication information, the receive end of information about the modulation manner used by the transmit end, so that the receive end performs demodulation based on the indication information. For example, the receive end receives the signal modulated through F-MPAPM and the indication information, and performs demodulation based on the indication information.

Certainly, in some embodiments, content indicated by the indication information may be pre-negotiated by the receive end and the transmit end, defined in a protocol, or the like.

In an optional implementation, that the transmit end transmits the modulation symbol includes:

The transmit end performs signal processing on the modulation symbol to obtain a transmit signal.

The transmit end transmits the transmit signal.

The signal processing includes but is not limited to inserting at least one of the following:
a synchronization sequence and a pilot sequence.

In this implementation, after F-MPAPM signal modulation is completed, the transmit end may further perform signal processing such as adding a synchronization header and a pilot signal, and then sends the signal, to improve signal transmission performance.

In this embodiment of this application, the transmit end modulates the information bit to the pulse quantity, the pulse position permutation and combination, and the pulse amplitude, to generate the corresponding modulation symbol. The transmit end transmits the modulation symbol. In this way, the information bit is supported to be modulated to the pulse quantity, the pulse position permutation and combination, and the pulse amplitude, to improve the band utilization rate of the information bit modulation.

FIG. 4 is a flowchart of an information bit demodulation method according to an embodiment of this application. As shown in FIG. 4, the method includes the following steps.

Step 401: A receive end obtains a transmit signal, and obtains a modulation symbol based on the transmit signal.

The obtaining a modulation symbol may mean that the receive end completes at least one signal processing step of system synchronization, channel estimation, channel equalization, and the like to obtain the modulation symbol.

Step 402: The receive end performs demodulation based on a mapping relationship between a pulse quantity, a pulse position permutation and combination, and a pulse amplitude of the modulation symbol and an information bit, to obtain the information bit.

The demodulation may be coherent demodulation or incoherent demodulation. For example, in the incoherent demodulation manner, the pulse quantity, a pulse position, and the pulse amplitude of the modulation symbol may be obtained by detecting a corresponding resource. For example, average power of received signals is collected in each slot of a corresponding frame, to obtain average power information of a corresponding pulse in each slot, and further obtain the pulse quantity, the pulse position, and the pulse amplitude of the modulation symbol.

The performing demodulation based on a mapping relationship between a pulse quantity, a pulse position permutation and combination, and a pulse amplitude of the modulation symbol and an information bit may mean performing demodulation based on a mapping relationship between the pulse quantity and the information bit, a mapping relationship between the pulse position permutation and combination and the information bit, and a mapping relationship between the pulse amplitude and the information bit. Alternatively, information bit demodulation may be performed based on a mapping relationship between {the pulse quantity, the pulse relative position permutation and combination, the pulse amplitude} and an information bit stream. Specifically, a demodulation manner is not limited in embodiments of this application. For example, demodulation may be performed based on another mapping relationship between the information bit and a symbol. In addition, the receive end may specifically perform signal demodulation based on the coherent demodulation or incoherent demodulation manner.

Optionally, in one first time domain resource unit, the pulse quantity carries $\log_2 n$ bits of the information bit, the pulse position permutation and combination carries $\log_2 C_M^n$ bits of the information bit, and the pulse amplitude carries $n \cdot \log_2 L$ bits of the information bit.

n is a pulse quantity, of the modulation symbol, in the one first time domain resource unit. L is an amplitude modulation order supported by each pulse. M is a quantity of second time domain resource units included in the one first time domain resource unit. n, L, and M are positive integers.

Optionally, that the receive end performs demodulation based on a mapping relationship between a pulse quantity, a pulse position permutation and combination, and a pulse amplitude of the modulation symbol and an information bit, to obtain the information bit includes:

The receive end demodulates a first part of bits of the information bit based on the mapping relationship between the pulse quantity of the modulation symbol and the information bit.

The receive end demodulates a second part of bits of the information bit based on the mapping relationship between the pulse position permutation and combination of the modulation symbol and the information bit.

The receive end demodulates a third part of bits of the information bit based on the mapping relationship between the pulse amplitude of the modulation symbol and the information bit.

For example, for a case that there are M slots in one frame and a maximum of M pulses are allowed, if it is detected that a pulse quantity in one frame is n, $\log_2 M$ information bits corresponding to the pulse quantity are demodulated according to a preset modulation rule. For example, for an F-MPAPM signal that has eight slots in one frame, if there are two pulses in the frame, a corresponding information bit is "001". Similarly, if there are three or six pulses, mapped information bits are respectively "010" or "101", that is, the first part of bits are obtained.

Further, based on a position permutation and combination of the n pulses in the frame, that is, relative positions of the n pulses in the frame, corresponding $\log_2 C_M^n$ information bits are demodulated according to the preset modulation rule, that is, the second part of bits are obtained.

Further, an amplitude of each pulse of the n pulses is compared with preset (L - 1) amplitude thresholds, to perform demodulation, so that n · $\log_2 L$ information bits corresponding to the pulse amplitude are demodulated, that is, the third part of bits are obtained.

Optionally, the pulse quantity of the modulation symbol is the pulse quantity in the one first time domain resource unit.

The pulse position permutation and combination of the modulation symbol is a position permutation and combination, of a pulse in the one first time domain resource unit, in the first time domain resource unit.

The pulse amplitude of the modulation symbol is an amplitude of each pulse in the one first time domain resource unit.

Optionally, the method further includes:

The receive end receives indication information. The indication information indicates at least one of the following:

the quantity of second time domain resource units in the one first time domain resource unit;
a maximum quantity of pulses in the one first time domain resource unit; and
the amplitude modulation order supported by the pulse.

That the receive end performs demodulation based on a mapping relationship between a pulse quantity, a pulse position permutation and combination, and a pulse amplitude of the modulation symbol and an information bit includes:
The receive end performs, based on the indication information, demodulation based on the mapping relationship between the pulse quantity, the pulse position permutation and combination, and the pulse amplitude of the modulation symbol and the information bit.

Optionally, the indication information is carried in one of the following:
DCI, SCI, and a preamble in a Wi-Fi physical frame.

It should be noted that this embodiment is used as an implementation of the receive end corresponding to the embodiment shown in FIG. 2. For a specific implementation of this embodiment, refer to the related descriptions of the embodiment shown in FIG. 2. To avoid repeated descriptions, details are not described again in this embodiment.

The following uses two embodiments to illustrate the methods provided in embodiments of this application.

Embodiment 1

In this embodiment, an example in which there are M slots and a maximum of n pulses in each frame, and each pulse supports L-order PAM modulation is used.

A modulation scenario shown in FIG. 3 is F(8,4) pulse 8-PPM-4PAM. F(8,4) herein means that there are eight slots and a maximum of four pulses in one frame, that is, a pulse quantity may be n = {1,2,3,4}. A transmit end performs signal modulation in the following manner:

(1) First, a to-be-modulated bit stream is divided. Based on a modulable dimension of F(8,4) pulse 8-PPM-4PAM, the to-be-transmitted bit stream may be divided into three parts. That is, the three parts are respectively carried in a pulse quantity, a pulse permutation and combination, and a pulse amplitude of each frame.

(2) Next, a bit-to-symbol mapping process is performed. Based on the modulable dimension of F(8,4) pulse 8-PPM-4PAM, bit-to-symbol mapping may also be divided into the following three steps (where an order of the steps is not specified, and the steps are merely used as examples for description herein). A first frame in FIG. 3 is used as an example.

(I) Because a maximum of four pulses may be sent in each frame, n = {1,2,3,4} pulses may be randomly selected to be sent in the frame. n = 3 pulses are selected to be sent in the first frame, and $\log_2 4 = 2$ bits may be carried. Therefore, two information bits in the bit stream may be mapped to the pulse quantity 3 as a first part of information bits.

(II) After it is determined that the three pulses may be sent in the frame, because relative positions of the three pulses in the eight slots of the frame may also be randomly selected, $C_8^3 = 56$ relative position permutations and combinations may be formed, and each permutation and combination may carry $\log_2 56 = 5.8$ information bits. Due to inability to map a fractional quantity of bits, 0.8 information bit may be discarded, and only five of the information bits are transmitted, which correspond to 32 relative position permutations and combinations. How to select optimal permutations and combinations, that is, how to select the 32 permutations and combinations from the 56 permutations and combination, is not limited in this embodiment, and details are not described herein again. Therefore, five information bits in the bit stream may be mapped to the 32 relative position permutations and combinations of the three pulses as a second part of information bits.

(III) After the relative positions of the three pulses are determined, because each pulse supports 4-order PAM modulation, the amplitude of each pulse is controlled to carry the information bit. 4PAM is used as an example. In other words, a four-order pulse amplitude exists. A mapping relationship between the information bit and the pulse amplitude may be: "00" to a first-order amplitude, "01" to a second-order amplitude, "11" to a third-order amplitude, and "10" to a fourth-order amplitude. It should be noted that, the mapping relationship herein is merely used as an example for description, and does not constitute a limitation on the mapping relationship between information bit and the pulse amplitude. Therefore, six information bits in the bit stream may be respectively mapped to the four-order amplitude of the three pulses as a third part of information bits.

(3) After F(8,4) pulse 8-PPM-4PAM symbol modulation is completed, the transmit end may further perform signal processing such as inserting a synchronization sequence or a pilot sequence, and then sends a signal.

(4) Further, the transmit end needs to notify a receive end of modulation-related indication information of F(8,4) pulse 8-PPM-4PAM, where the indication information includes at least one piece of the following information:

the slot quantity M in one frame, that is, a PPM modulation order, which is 8 in the example;
the maximum quantity n, of pulses, allowed in one frame, which is 4 in the example; and
the amplitude modulation order L supported by the pulse, which is 4 in the example.

It should be noted that the indication information is carried in different signaling in different communication systems. For example, if the modulation manner is applied to a cellular system, the indication information is carried by using DCI. If the modulation manner is applied to a sidelink system, the indication information is carried by using SCI. If the modulation manner is applied to a Wi-Fi system, the indication information is carried by using a preamble in a physical protocol data unit (physical protocol data unit, PPDU).

After completing signal processing such as symbol synchronization, channel estimation, and channel equalization, the receive end performs F(8,4) pulse 8-PPM-4PAM demodulation based on an indication of the received indication information, to obtain the information bit. For a specific demodulation process, refer to the embodiment shown in FIG. 4. Details are not described herein again.

Embodiment 2

In this embodiment, an example in which there are M slots and a maximum of n pulses in each frame, and each pulse supports L-order PAM modulation is still used as an example for description.

This embodiment is different from Embodiment 1 in the following content:
A to-be-modulated bit stream is divided into three parts. A first part of the bit stream is mapped to a dimension of a multiple pulse quantity.

A second part of bit stream is mapped to a multiple pulse relative position permutation and combination. A third part of bit stream is mapped to a dimension of a pulse amplitude. F-MPAPM modulation is implemented based on a specific bit-symbol mapping relationship.

In this embodiment, signal mapping may be performed on the to-be-modulated bit stream based on a direct mapping relationship between an information bit and {the pulse quantity, the pulse relative position permutation and combination, the pulse amplitude}, to implement F-MPAPM modulation. F(8,4) pulse 8-PPM-4PAM shown in FIG. 3 is still used as an example for description.

A transceiver end first determines to use F(8,4) pulse 8-PPM-4PAM modulation, and then performs bit-to-symbol mapping. Based on a modulable dimension of F(8,4) pulse 8-PPM-4PAM, signal mapping may alternatively be performed on the to-be-modulated bit stream based on the direct mapping relationship between the information bit and {the pulse quantity, the pulse relative position permutation and combination, the pulse amplitude}, A first frame in FIG. 3 is used as an example. Symbol mapping is performed on a to-be-modulated bit based on a direct mapping relationship between the to-be-modulated bit and {3, 11, {1, 4, 3}}. 3 represents that three pulses are sent in the frame data, and two bits may be carried. 11 represents a sequence number that is of a pulse relative position permutation and combination pattern and that is preset by the transceiver end, and indicates an eleventh relative position of 56 relative position permutations and combinations of the three pulses in eight slots. {1, 4, 3} represents pulse amplitudes of the three pulses.

After F(8,4) pulse 8-PPM-4PAM symbol modulation is completed, other signal processing and indication information are similar to those in Embodiment 1 of the present invention, and details are not described herein again.

In this embodiment of this application, the following may be implemented:

The information bit is carried in the three dimensions: the multiple pulse quantity, the multiple pulse relative position permutation and combination, and the pulse amplitude. F-MPAPM modulation is implemented based on a specific bit-symbol mapping relationship.

Stepwise mapping, direct mapping, or mapping based on another mapping relationship may be performed between the to-be-modulated bit and a symbol, to implement F-MPAPM modulation.

A transmit end may notify a receive end of indication information related to F-MPAPM modulation, to instruct the receive end to perform F-MPAPM symbol demodulation.

In this embodiment of this application, information modulation is implemented by fully using the three dimensions: the pulse quantity of flexible multiple pulse amplitude position modulation F-MPAPM, the pulse relative position permutation and combination, and the pulse amplitude, so that signal modulation with a higher band utilization rate is implemented on the basis of ensuring average power efficiency.

FIG. 5 is a diagram of a structure of an information bit modulation apparatus according to an embodiment of this application. As shown in FIG. 5, the apparatus includes:

> a modulation module 501, configured to modulate an information bit to a pulse quantity, a pulse position permutation and combination, and a pulse amplitude, to generate a corresponding modulation symbol; and
> a first sending module 502, configured to transmit the modulation symbol.

Optionally, in one first time domain resource unit, the pulse quantity carries $\log_2 n$ bits of the information bit, the pulse position permutation and combination carries $\log_2 C_M^n$ bits of the information bit, and the pulse amplitude carries $n \cdot \log_2 L$ bits of the information bit.

n is a pulse quantity, of the modulation symbol, in the one first time domain resource unit. L is an amplitude modulation order supported by each pulse. M is a quantity of second time domain resource units included in the one first time domain resource unit. n, L, and M are positive integers.

Optionally, the modulation module 501 is configured to:

> modulate a first part of bits of the information bit to the pulse quantity;
> modulate a second part of bits of the information bit to the pulse position permutation and combination; and
> modulate a third part of bits of the information bit to the pulse amplitude.

Optionally, a pulse quantity of the modulation symbol is the pulse quantity in the one first time domain resource unit.

A pulse position permutation and combination of the modulation symbol is a position permutation and combination, of a pulse in the one first time domain resource unit, in the first time domain resource unit.

A pulse amplitude of the modulation symbol is an amplitude of each pulse in the one first time domain resource unit.

Optionally, the apparatus further includes:
a second sending module, configured to send indication information, where the indication information indicates at least one of the following:

> the quantity of second time domain resource units in the one first time domain resource unit;
> a maximum quantity of pulses in the one first time domain resource unit; and
> the amplitude modulation order supported by the pulse.

Optionally, the indication information is carried in one of the following:
downlink control information DCI, sidelink control information SCI, and a preamble in a Wi-Fi physical frame.

Optionally, the first sending module 502 is configured to: perform signal processing on the modulation symbol to obtain a transmit signal; and transmit the transmit signal.

Optionally, the signal processing includes inserting at least one of the following:
a synchronization sequence and a pilot sequence.

The information bit modulation apparatus in this embodiment of this application may improve a band utilization rate.

The information bit modulation apparatus in this embodiment of this application may be an apparatus or an apparatus or electronic device with an operating system, or may be a component, an integrated circuit, or a chip in a transmit end.

The information bit modulation apparatus provided in this embodiment of this application can implement the processes implemented in the method embodiment of FIG. 2, and a same technical effect is achieved. To avoid repetition, details are not described herein again.

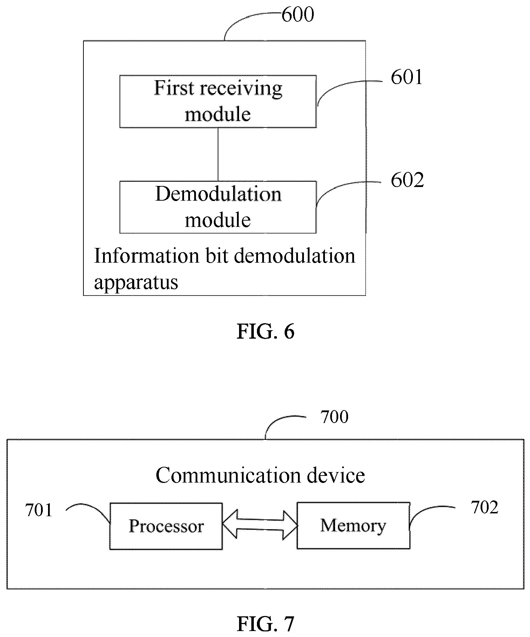

FIG. 6 is a diagram of a structure of an information bit demodulation apparatus according to an embodiment of this application. As shown in FIG. 6, the apparatus includes:

> a first receiving module 601, configured to: obtain a transmit signal, and obtain a modulation symbol based on the transmit signal; and
> a demodulation module 602, configured to perform demodulation based on a mapping relationship between a pulse quantity, a pulse position permutation and combination, and a pulse amplitude of the modulation symbol and an information bit, to obtain the information bit.

Optionally, in one first time domain resource unit, the pulse quantity carries $\log_2 n$ bits of the information bit, the pulse position permutation and combination carries $\log_2 C_M^n$ bits of the information bit, and the pulse amplitude carries $n \cdot \log_2 L$ bits of the information bit.

n is a pulse quantity, of the modulation symbol, in the one first time domain resource unit. L is an amplitude modulation order supported by each pulse. M is a quantity of second time domain resource units included in the one first time domain resource unit. n, L, and M are positive integers.

Optionally, the demodulation module 602 is configured to:

demodulate a first part of bits of the information bit based on a mapping relationship between the pulse quantity of the modulation symbol and the information bit;

demodulate a second part of bits of the information bit based on a mapping relationship between the pulse position permutation and combination of the modulation symbol and the information bit; and

demodulate a third part of bits of the information bit based on a mapping relationship between the pulse amplitude of the modulation symbol and the information bit.

Optionally, the pulse quantity of the modulation symbol is the pulse quantity in the one first time domain resource unit.

The pulse position permutation and combination of the modulation symbol is a position permutation and combination, of a pulse in the one first time domain resource unit, in the first time domain resource unit.

The pulse amplitude of the modulation symbol is an amplitude of each pulse in the one first time domain resource unit.

Optionally, the apparatus further includes:
a second receiving module, configured to receive indication information, where the indication information indicates at least one of the following:

the quantity of second time domain resource units in the one first time domain resource unit;

a maximum quantity of pulses in the one first time domain resource unit; and

the amplitude modulation order supported by the pulse.

The demodulation module 602 is configured to perform, based on the indication information, demodulation based on the mapping relationship between the pulse quantity, the pulse position permutation and combination, and the pulse amplitude of the modulation symbol and the information bit.

Optionally, the indication information is carried in one of the following:
downlink control information DCI, sidelink control information SCI, and a preamble in a Wi-Fi physical frame.

The information bit demodulation apparatus in this embodiment of this application may improve a band utilization rate.

The information bit demodulation apparatus in this embodiment of this application may be an apparatus or an apparatus or electronic device with an operating system, or may be a component, an integrated circuit, or a chip in a receive end.

The information bit demodulation apparatus provided in this embodiment of this application can implement the processes implemented in the method embodiment of FIG. 4, and a same technical effect can be achieved. To avoid repetition, details are not described herein again.

Optionally, as shown in FIG. 7, an embodiment of this application further provides a communication device 700. The communication device 700 includes a processor 701, a memory 702, a program or instructions stored in the memory 702 and capable of being run on the processor 701. For example, when the communication device 700 is a transmit end, and the program or instructions are executed by the processor 701, the processes of the foregoing information bit modulation method embodiment are implemented, and a same technical effect can be achieved. When the communication device 700 is a receive end, and the program or instructions are executed by the processor 701, the processes of the foregoing information bit demodulation method embodiment are implemented, and a same technical effect can be achieved. To avoid repetition, details are not described herein again. The communication device is a terminal or a network side device.

An embodiment of this application further provides a communication device, including a processor and a communication interface. The communication interface is configured to: modulate an information bit to a pulse quantity, a pulse position permutation and combination, and a pulse amplitude, to generate a corresponding modulation symbol; and transmit the modulation symbol.

Alternatively, the communication interface is configured to: obtain a transmit signal, and obtain a modulation symbol based on the transmit signal; and perform demodulation based on a mapping relationship between a pulse quantity, a pulse position permutation and combination, and a pulse amplitude of the modulation symbol and an information bit, to obtain the information bit.

This communication device embodiment corresponds to the method embodiments shown in FIG. 2 and FIG. 4. All implementation processes and implementations of the foregoing method embodiments may be applicable to this communication device embodiment, and a same technical effect can be achieved.

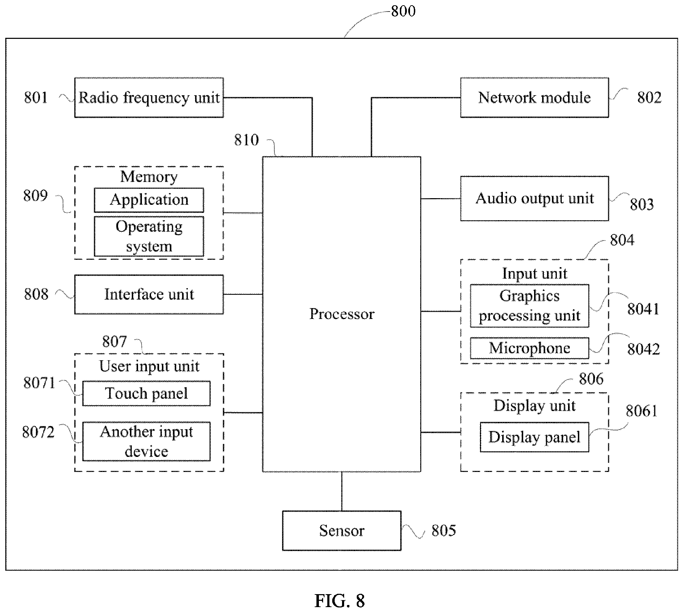

Specifically, FIG. 8 is a schematic diagram of a hardware structure of a transmit end according to an embodiment of this application. FIG. 8 is described by using an example in which the transmit end is a terminal.

The transmit end 800 includes but is not limited to at least a part of components of a radio frequency unit 801, a network module 802, an audio output unit 803, an input unit 804, a sensor 805, a display unit 806, a user input unit 807, an interface unit 808, a memory 809, a processor 810, and the like.

It can be understood by a person skilled in the art that the transmit end 800 may further include a power supply (for example, a battery) that supplies power to each component. The power supply may be logically connected to the processor 810 by using a power management system, so that functions such as charge and discharge management and power consumption management are implemented by using the power management system. The structure of the terminal shown in FIG. 8 does not constitute a limitation on a communication device. The terminal may include more or fewer components than those shown in the figure, or some components are combined, or component arrangements are different. Details are not described herein again.

It should be understood that, in this embodiment of this application, the input unit 804 may include a graphics processing unit (Graphics Processing Unit, GPU) 8041 and a microphone 8042. The graphics processing unit 8041 processes image data of a still picture or a video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or instructions as well as various data. The memory 809 may mainly include a program or instruction storage area and a data storage area. The program or instruction storage area may store an operating system, an application or instructions required for at least one function (for example, a sound play function or an image play function), and the like. In addition, the memory 809 may include a high-speed random access memory, and may further include a non-volatile memory. The non-volatile memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 810 may include one or more processing units. Optionally, the processor 810 may integrate an application processor and a modem processor. The application processor mainly processes an operating system, a user interface, an application program or instructions, and the like. The modem processor, such as a baseband processor, mainly processes wireless communication. It may be understood that, alternatively, the modem processor may not be integrated into the processor 810.

The radio frequency unit 801 or the processor 810 is configured to modulate an information bit to a pulse quantity, a pulse position permutation and combination, and a pulse amplitude, to generate a corresponding modulation symbol.

The radio frequency unit 801 is configured to transmit the modulation symbol.

Optionally, in one first time domain resource unit, the pulse quantity carries $\log_2 n$ bits of the information bit, the pulse position permutation and combination carries $\log_2 C_M^n$ bits of the information bit, and the pulse amplitude carries $n \cdot \log_2 L$ bits of the information bit.

n is a pulse quantity, of the modulation symbol, in the one first time domain resource unit. L is an amplitude modulation order supported by each pulse. M is a quantity of second time domain resource units included in the one first time domain resource unit. n, L, and M are positive integers.

Optionally, the modulating an information bit to a pulse quantity, a pulse position permutation and combination, and a pulse amplitude includes:

modulating a first part of bits of the information bit to the pulse quantity;
modulating a second part of bits of the information bit to the pulse position permutation and combination; and
modulating a third part of bits of the information bit to the pulse amplitude.

Optionally, a pulse quantity of the modulation symbol is the pulse quantity in the one first time domain resource unit.

A pulse position permutation and combination of the modulation symbol is a position permutation and combination, of a pulse in the one first time domain resource unit, in the first time domain resource unit.

A pulse amplitude of the modulation symbol is an amplitude of each pulse in the one first time domain resource unit.

Optionally, the radio frequency unit 801 is further configured to:

send indication information, where the indication information indicates at least one of the following:

the quantity of second time domain resource units in the one first time domain resource unit;
a maximum quantity of pulses in the one first time domain resource unit; and
the amplitude modulation order supported by the pulse.

Optionally, the indication information is carried in one of the following:

downlink control information DCI, sidelink control information SCI, and a preamble in a Wi-Fi physical frame.

The transmit end may improve a band utilization rate.

Specifically, the transmit end in this embodiment of the present invention further includes instructions or a program stored in the memory 809 and capable of being run on the processor 810. The processor 810 invokes the instructions or program in the memory 809 to perform the method performed by the modules shown in FIG. 5, and a same technical effect is achieved. To avoid repetition, details are not described herein again.

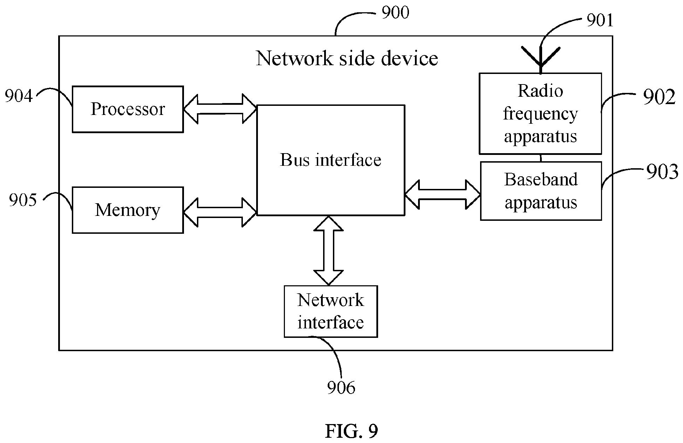

Specifically, an embodiment of this application further provides a receive end. That the receive end is a network side device is used as an example. As shown in FIG. 9, the receive end 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes information that needs to be sent, and sends processed information to the radio frequency apparatus 902. The radio frequency apparatus 902 processes the received information, and sends processed information by using the antenna 901.

The radio frequency apparatus may be located in the baseband apparatus 903. The method performed by the receive end in the foregoing embodiment may be implemented in the baseband apparatus 903, and the baseband apparatus 903 includes a processor 904 and a memory 905.

The baseband apparatus 903 may include, for example, at least one baseband board. A plurality of chips are disposed on the baseband board. As shown in FIG. 9, one of the chips is, for example, the processor 904, and is connected to the memory 905, to invoke a program in the memory 905 to perform the operations of the network side device shown in the foregoing method embodiment.

The baseband apparatus 903 may further include a network interface 906, and the network interface is configured to exchange information with the radio frequency apparatus 902. The interface is, for example, a common public radio interface (common public radio interface, CPRI).

The radio frequency apparatus 902 is configured by the receive end to: obtain a transmit signal, and obtain a modulation symbol based on the transmit signal.

The radio frequency apparatus 902 or the processor 904 is configured to perform demodulation based on a mapping relationship between a pulse quantity, a pulse position permutation and combination, and a pulse amplitude of the modulation symbol and an information bit, to obtain the information bit.

Optionally, in one first time domain resource unit, the pulse quantity carries $\log_2 n$ bits of the information bit, the pulse position permutation and combination carries $\log_2 C_M^n$ bits of the information bit, and the pulse amplitude carries $n \cdot \log_2 L$ bits of the information bit.

n is a pulse quantity, of the modulation symbol, in the one first time domain resource unit. L is an amplitude modulation order supported by each pulse. M is a quantity of second time domain resource units included in the one first time domain resource unit. n, L, and M are positive integers.

Optionally, the performing demodulation based on a mapping relationship between a pulse quantity, a pulse position permutation and combination, and a pulse amplitude of the modulation symbol and an information bit, to obtain the information bit includes:

demodulating a first part of bits of the information bit based on a mapping relationship between the pulse quantity of the modulation symbol and the information bit;
demodulating a second part of bits of the information bit based on a mapping relationship between the pulse position permutation and combination of the modulation symbol and the information bit; and
demodulating a third part of bits of the information bit based on a mapping relationship between the pulse amplitude of the modulation symbol and the information bit.

Optionally, the pulse quantity of the modulation symbol is the pulse quantity in the one first time domain resource unit.

The pulse position permutation and combination of the modulation symbol is a position permutation and combination, of a pulse in the one first time domain resource unit, in the first time domain resource unit.

The pulse amplitude of the modulation symbol is an amplitude of each pulse in the one first time domain resource unit.

Optionally, the radio frequency apparatus 902 is further configured to:

receive indication information, where the indication information indicates at least one of the following:

> the quantity of second time domain resource units in the one first time domain resource unit;
> a maximum quantity of pulses in the one first time domain resource unit; and
> the amplitude modulation order supported by the pulse.

The performing demodulation based on a mapping relationship between a pulse quantity, a pulse position permutation and combination, and a pulse amplitude of the modulation symbol and an information bit includes: performing, based on the indication information, demodulation based on the mapping relationship between the pulse quantity, the pulse position permutation and combination, and the pulse amplitude of the modulation symbol and the information bit.

Optionally, the indication information is carried in one of the following:

downlink control information DCI, sidelink control information SCI, and a preamble in a Wi-Fi physical frame.

The receive end may improve a band utilization rate.

Specifically, the receive end in this embodiment of the present invention further includes instructions or a program stored in the memory 905 and capable of being run on the processor 904. The processor 904 invokes the instructions or program in the memory 905 to perform the method performed by the modules shown in FIG. 6, and a same technical effect is achieved. To avoid repetition, details are not described herein again.

An embodiment of this application further provides a readable storage medium. The readable storage medium stores a program or instructions. When the program or instructions are executed by a processor, steps of an information bit modulation method provided in an embodiment of this application are implemented; or when the program or instructions are executed by a processor, steps of an information bit demodulation method provided in an embodiment of this application are implemented.

The processor is the processor in the terminal described in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions, to implement the processes of the foregoing information bit modulation method or information bit demodulation method embodiment, and a same technical effect can be achieved. To avoid repetition, details are not described herein again.

It should be understood that the chip mentioned in this embodiment of this application may also be referred to as a system-level chip, a system chip, a chip system, or a system on chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or a compact disc), and includes a plurality of instructions for instructing a terminal (which may be a mobile phone, a computer, a server, an air conditioner, a network device, or the like) to perform the method described in the embodiments of this application.

The embodiments of this application are described above with reference to the accompanying drawings, but this application is not limited to the foregoing specific implementations, and the foregoing specific implementations are only illustrative and not restrictive.

Under the enlightenment of this application, a person of ordinary skill in the art can make many forms without departing from the purpose of this application. The invention is defined by the appended claims.

**Claims**

1. An information bit modulation method performed by a transmit end, comprising:

   modulating (201), by the transmit end, information bits to a pulse quantity, a pulse position permutation and combination, and a pulse amplitude, to generate a corresponding modulation symbol; and
   transmitting (202), by the transmit end, the modulation symbol,
   wherein the modulating (201), by a transmit end, information bits to a pulse quantity, a pulse position permutation and combination, and a pulse amplitude comprises:

   modulating, by the transmit end, a first part of bits of the information bits to the pulse quantity;
   modulating, by the transmit end, a second part of bits of the information bits to the pulse position permutation and combination; and
   modulating, by the transmit end, a third part of bits of the information bits to the pulse amplitude.

2. The method according to claim 1, wherein in one first time domain resource unit, the pulse quantity carries $\log_2 n$ bits of the information bits, the pulse position permutation and combination carries $\log_2 C_M^n$ bits of the information bits, and the pulse amplitude carries $n \cdot \log_2 L$ bits of the information bits; and n is a pulse quantity, of the modulation symbol, in the one first time domain resource unit, L is an amplitude modulation order supported by each pulse, M is a quantity of second time domain resource units comprised in the one first time domain resource unit, and n, L, and M are positive integers.

3. The method according to claim 1 or 2, wherein a pulse quantity of the modulation symbol is the pulse quantity in one first time domain resource unit;

   a pulse position permutation and combination of the modulation symbol is a position permutation and combination, of a pulse in the one first time domain resource unit, in the first time domain resource unit; and
   a pulse amplitude of the modulation symbol is an amplitude of each pulse in the one first time domain resource unit.

4. The method according to claim 1 or 2, wherein the method further comprises:
   sending, by the transmit end, indication information, wherein the indication information indicates at least one of the following:

   the quantity of second time domain resource units in the one first time domain resource unit;
   a maximum quantity of pulses in the one first time domain resource unit; and
   the amplitude modulation order supported by the pulse.

5. The method according to claim 4, wherein the indication information is carried in one of the following: downlink control information, DCI, sidelink control information, SCI, and a preamble in a Wi-Fi physical frame.

6. An information bit demodulation method performed by a receive end, comprising:

   obtaining (401), by the receive end, a transmit signal, and obtaining a modulation symbol based on the transmit signal; and
   performing (402), by the receive end, demodulation based on a mapping relationship between a pulse quantity, a pulse position permutation and combination, and a pulse amplitude of the modulation symbol and information bits, to obtain the information bits,
   wherein the performing (402), by the receive end, demodulation based on a mapping relationship between a pulse quantity, a pulse position permutation and combination, and a pulse amplitude of the modulation symbol and information bits, to obtain the information bits comprises:

   demodulating, by the receive end, a first part of bits of the information bits based on a mapping relationship between the pulse quantity of the modulation symbol and the information bits;
   demodulating, by the receive end, a second part of bits of the information bits based on a mapping relationship between the pulse position permutation and combination of the modulation symbol and the information bits; and
   demodulating, by the receive end, a third part of bits of the information bits based on a mapping relationship between the pulse amplitude of the modulation symbol and the information bits.

**7.** The method according to claim 6, wherein in one first time domain resource unit, the pulse quantity carries $\log_2 n$ bits of the information bits, the pulse position permutation and combination carries $\log_2 C_M^n$ bits of the information bits, and the pulse amplitude carries $n \cdot \log_2 L$ bits of the information bits; and
n is a pulse quantity, of the modulation symbol, in one the first time domain resource unit, L is an amplitude modulation order supported by each pulse, M is a quantity of second time domain resource units comprised in one the first time domain resource unit, and n, L, and M are positive integers.

**8.** The method according to claim 6 or 7, wherein the pulse quantity of the modulation symbol is the pulse quantity in the one first time domain resource unit;

> the pulse position permutation and combination of the modulation symbol is a position permutation and combination, of a pulse in the one first time domain resource unit, in the first time domain resource unit; and
> the pulse amplitude of the modulation symbol is an amplitude of each pulse in the one first time domain resource unit.

**9.** The method according to claim 6 or 7, wherein the method further comprises:
receiving, by the receive end, indication information, wherein the indication information indicates at least one of the following:

> the quantity of second time domain resource units in the one first time domain resource unit;
> a maximum quantity of pulses in the one first time domain resource unit; and
> the amplitude modulation order supported by the pulse; and
> the performing (402), by the receive end, demodulation based on a mapping relationship between a pulse quantity, a pulse position permutation and combination, and a pulse amplitude of the modulation symbol and information bits comprises:
> performing, by the receive end based on the indication information, demodulation based on the mapping relationship between the pulse quantity, the pulse position permutation and combination, and the pulse amplitude of the modulation symbol and the information bits.

**10.** The method according to claim 9, wherein the indication information is carried in one of the following: downlink control information, DCI, sidelink control information, SCI, and a preamble in a Wi-Fi physical frame.

**11.** A transmit end, comprising a memory, a processor, and a program or instructions stored in the memory and capable of being run on the processor, wherein when the program or instructions are executed by the processor, the steps of the information bit modulation method according to any one of claims 1 to 5 are implemented.

**12.** A receive end, comprising a memory, a processor, and a program or instructions stored in the memory and capable of being run on the processor, wherein when the program or instructions are executed by the processor, the steps of the information bit demodulation method according to any one of claims 6 to 10 are implemented.

**13.** A readable storage medium comprising a program or instructions; which, when executed by a computer, cause the computer to carry out the steps of the information bit modulation method according to any one of claims 1 to 5 or which, when executed by a computer, cause the computer to carry out the steps of the information bit demodulation method according to any one of claims 6 to 10·

**Patentansprüche**

**1.** Informationsbit-Modulationsverfahren, das von einem Sendeende durchgeführt wird, umfassend:

> Modulieren (201), durch das Sendeende, von Informationsbits zu einer Pulsanzahl, einer Pulspositionspermutation und -kombination und einer Pulsamplitude, um ein entsprechendes Modulationssymbol zu erzeugen; und
> Übertragen (202), durch das Sendeende, des Modulationssymbols,
> wobei das Modulieren (201), durch ein Sendeende, von Informationsbits zu einer Pulsanzahl, einer Pulspositionspermutation und -kombination und einer Pulsamplitude umfasst:
>
> > Modulieren, durch das Sendeende, eines ersten Teils von Bits der Informationsbits zu der Pulsanzahl;
> > Modulieren, durch das Sendeende, eines zweiten Teils von Bits der Informationsbits zu der Pulspositionspermutation und -kombination; und
> > Modulieren, durch das Sendeende, eines dritten Teils von Bits der Informationsbits zu der Pulsamplitude.

**2.** Verfahren nach Anspruch 1, wobei in einer ersten Zeitbereichsressourceneinheit die Pulsanzahl $\log_2 n$ Bits der Informationsbits trägt, die Pulspositionspermutation und -kombination $\log_2 C_M^n$ Bits der Informationsbits trägt und die Pulsamplitude $n \cdot \log_2 L$ Bits der Informationsbits trägt; und
n eine Pulsanzahl des Modulationssymbols in der einen ersten Zeitbereichsressourceneinheit ist, L eine Amplitudenmodulationsordnung ist, die von jedem Puls unterstützt wird, M eine Anzahl von zweiten Zeitbereichsressourceneinheiten ist, die in der einen ersten Zeitbereichsressourceneinheit umfasst sind, und n, L und M positive ganze Zahlen sind.

3. Verfahren nach Anspruch 1 oder 2, wobei eine Pulsanzahl des Modulationssymbols die Pulsanzahl in einer ersten Zeitbereichsressourceneinheit ist;

eine Pulspositionspermutation und -kombination des Modulationssymbols eine Positionspermutation und -kombination eines Pulses in der einen ersten Zeitbereichsressourceneinheit in der ersten Zeitbereichsressourceneinheit ist; und
eine Pulsamplitude des Modulationssymbols eine Amplitude jedes Pulses in der einen ersten Zeitbereichsressourceneinheit ist.

4. Verfahren nach Anspruch 1 oder 2, wobei das Verfahren ferner umfasst:
Senden, durch das Sendeende, von Anzeigeinformation, wobei die Anzeigeinformation mindestens eines der folgenden anzeigt:

die Anzahl von zweiten Zeitbereichsressourceneinheiten in der einen ersten Zeitbereichsressourceneinheit;
eine maximale Anzahl von Pulsen in der einen ersten Zeitbereichsressourceneinheit; und
die Amplitudenmodulationsordnung, die von dem Puls unterstützt wird.

5. Verfahren nach Anspruch 4, wobei die Anzeigeinformation in einem der folgenden getragen wird: Downlink-Steuerinformation, DCI (downlink control information), Sidelink-Steuerinformation, SCI (sidelink control information), und einer Präambel in einem Wi-Fi-Physikrahmen.

6. Informationsbit-Demodulationsverfahren, das von einem Empfangsende durchgeführt wird, umfassend:

Erhalten (401), durch das Empfangsende, eines Sendesignals und Erhalten eines Modulationssymbols basierend auf dem Sendesignal; und
Durchführen (402), durch das Empfangsende, einer Demodulation basierend auf einer Abbildungsbeziehung zwischen einer Pulsanzahl, einer Pulspositionspermutation und -kombination und einer Pulsamplitude des Modulationssymbols und Informationsbits, um die Informationsbits zu erhalten,
wobei das Durchführen (402), durch das Empfangsende, einer Demodulation basierend auf einer Abbildungsbeziehung zwischen einer Pulsanzahl, einer Pulspositionspermutation und -kombination und einer Pulsamplitude des Modulationssymbols und Informationsbits, um die Informationsbits zu erhalten, umfasst:

Demodulieren, durch das Empfangsende, eines ersten Teils von Bits der Informationsbits basierend auf einer Abbildungsbeziehung zwischen der Pulsanzahl des Modulationssymbols und den Informationsbits;
Demodulieren, durch das Empfangsende, eines zweiten Teils von Bits der Informationsbits basierend auf einer Abbildungsbeziehung zwischen der Pulspositionspermutation und -kombination des Modulationssymbols und den Informationsbits; und
Demodulieren, durch das Empfangsende, eines dritten Teils von Bits der Informationsbits basierend auf einer Abbildungsbeziehung zwischen der Pulsamplitude des Modulationssymbols und den Informationsbits.

7. Verfahren nach Anspruch 6, wobei in einer ersten Zeitbereichsressourceneinheit die Pulsanzahl $\log_2 n$ Bits der Informationsbits trägt, die Pulspositionspermutation und -kombination $\log_2 C_M^n$ Bits der Informationsbits trägt und die Pulsamplitude $n \cdot \log_2 L$ Bits der Informationsbits trägt; und
n eine Pulsanzahl des Modulationssymbols in einer ersten Zeitbereichsressourceneinheit ist, L eine Amplitudenmodulationsordnung ist, die von jedem Puls unterstützt wird, M eine Anzahl von zweiten Zeitbereichsressourceneinheiten ist, die in einer ersten Zeitbereichsressourceneinheit umfasst sind, und n, L und M positive ganze Zahlen sind.

8. Verfahren nach Anspruch 6 oder 7, wobei die Pulsanzahl des Modulationssymbols die Pulsanzahl in der einen ersten Zeitbereichsressourceneinheit ist;

die Pulspositionspermutation und -kombination des Modulationssymbols eine Positionspermutation und -kombination eines Pulses in der einen ersten Zeitbereichsressourceneinheit in der ersten Zeitbereichsressourceneinheit ist; und
die Pulsamplitude des Modulationssymbols eine Amplitude jedes Pulses in der einen ersten Zeitbereichsressourceneinheit ist.

9. Verfahren nach Anspruch 6 oder 7, wobei das Verfahren ferner umfasst:
Empfangen, durch das Empfangsende, von Anzeigeinformation, wobei die Anzeigeinformation mindestens eines der folgenden anzeigt:

die Anzahl von zweiten Zeitbereichsressourceneinheiten in der einen ersten Zeitbereichsressourceneinheit;
eine maximale Anzahl von Pulsen in der einen ersten Zeitbereichsressourceneinheit; und
die Amplitudenmodulationsordnung, die von dem Puls unterstützt wird; und
das Durchführen (402), durch das Empfangsende, einer Demodulation basierend auf einer Abbildungsbeziehung zwischen einer Pulsanzahl, einer Pulspositionspermutation und -kombination und einer Pulsamplitude des Modulationssymbols und Informationsbits umfasst:
Durchführen, durch das Empfangsende basierend auf der Anzeigeinformation, einer Demodulation basierend auf der Abbildungsbeziehung zwischen der Pulsanzahl, der Pulspositionspermutation und -kombination und der Pulsamplitude des Modulationssymbols und den Informationsbits.

10. Verfahren nach Anspruch 9, wobei die Anzeigeinformation in einem der folgenden getragen wird:
Downlink-Steuerinformation, DCI (downlink control information), Sidelink-Steuerinformation, SCI (sidelink control information), und einer Präambel in einem Wi-Fi-Physikrahmen.

11. Sendeende, umfassend einen Speicher, einen Prozessor und ein Programm oder Anweisungen, die in dem Speicher gespeichert sind und auf dem Prozessor ausgeführt werden können, wobei, wenn das Programm oder die Anweisungen von dem Prozessor ausgeführt werden, die Schritte des Informationsbit-Modulationsverfahrens nach einem der Ansprüche 1 bis 5 implementiert werden.

12. Empfangsende, umfassend einen Speicher, einen Prozessor und ein Programm oder Anweisungen, die in dem Speicher gespeichert sind und auf dem Prozessor ausgeführt werden können, wobei, wenn das Programm oder die Anweisungen von dem Prozessor ausgeführt werden, die Schritte des Informationsbit-Demodulationsverfahrens nach einem der Ansprüche 6 bis 10 implementiert werden.

13. Lesbares Speichermedium, umfassend ein Programm oder Anweisungen; die, wenn sie von einem Computer ausgeführt werden, den Computer veranlassen, die Schritte des Informationsbit-Modulationsverfahrens nach einem der Ansprüche 1 bis 5 durchzuführen, oder die, wenn sie von einem Computer ausgeführt werden, den Computer veranlassen, die Schritte des Informationsbit-Demodulationsverfahrens nach einem der Ansprüche 6 bis 10 durchzuführen.

## Revendications

1. Procédé de modulation de bits d'information effectué par une extrémité d'émission, comprenant:

moduler (201), par l'extrémité d'émission, des bits d'information vers une quantité d'impulsions, une permutation et combinaison de positions d'impulsions, et une amplitude d'impulsion, pour générer un symbole de modulation correspondant; et
transmettre (202), par l'extrémité d'émission, le symbole de modulation,
dans lequel le fait de moduler (201), par une extrémité d'émission, des bits d'information vers une quantité d'impulsions, une permutation et combinaison de positions d'impulsions, et une amplitude d'impulsion comprend:

moduler, par l'extrémité d'émission, une première partie de bits des bits d'information vers la quantité d'impulsions;
moduler, par l'extrémité d'émission, une deuxième partie de bits des bits d'information vers la permutation et combinaison de positions d'impulsions; et
moduler, par l'extrémité d'émission, une troisième partie de bits des bits d'information vers l'amplitude d'impulsion.

2. Procédé selon la revendication 1, dans lequel dans une première unité de ressources de domaine temporel, la quantité d'impulsions porte $\log_2 n$ bits des bits d'information, la permutation et combinaison de positions d'impulsions porte $\log_2 C_M^n$ bits des bits d'information, et l'amplitude d'impulsion porte $n \cdot \log_2 L$ bits des bits d'information; et
n est une quantité d'impulsions, du symbole de modulation, dans la une première unité de ressources de domaine temporel, L est un ordre de modulation d'amplitude supporté par chaque impulsion, M est une quantité de deuxièmes unités de ressources de domaine temporel comprises dans la une première unité de ressources de domaine temporel, et n, L, et M sont des entiers positifs.

3. Procédé selon la revendication 1 ou 2, dans lequel une quantité d'impulsions du symbole de modulation est la quantité d'impulsions dans une première unité de ressources de domaine temporel;

une permutation et combinaison de positions d'impulsions du symbole de modulation est une permutation et combinaison de positions, d'une impulsion dans la une première unité de ressources de domaine temporel, dans la première unité de ressources de domaine temporel; et

une amplitude d'impulsion du symbole de modulation est une amplitude de chaque impulsion dans la une première unité de ressources de domaine temporel.

**4.** Procédé selon la revendication 1 ou 2, dans lequel le procédé comprend en outre:
envoyer, par l'extrémité d'émission, des informations d'indication, dans lequel les informations d'indication indiquent au moins l'un des éléments suivants:

la quantité de deuxièmes unités de ressources de domaine temporel dans la une première unité de ressources de domaine temporel;
une quantité maximale d'impulsions dans la une première unité de ressources de domaine temporel; et
l'ordre de modulation d'amplitude supporté par l'impulsion.

**5.** Procédé selon la revendication 4, dans lequel les informations d'indication sont portées dans l'un des éléments suivants:
informations de contrôle de liaison descendante, DCI (downlink control information), informations de contrôle de liaison latérale, SCI (sidelink control information), et un préambule dans une trame physique Wi-Fi.

**6.** Procédé de démodulation de bits d'information effectué par une extrémité de réception, comprenant:

obtenir (401), par l'extrémité de réception, un signal d'émission, et obtenir un symbole de modulation basé sur le signal d'émission; et
effectuer (402), par l'extrémité de réception, une démodulation basée sur une relation de mappage entre une quantité d'impulsions, une permutation et combinaison de positions d'impulsions, et une amplitude d'impulsion du symbole de modulation et des bits d'information, pour obtenir les bits d'information,
dans lequel le fait d'effectuer (402), par l'extrémité de réception, une démodulation basée sur une relation de mappage entre une quantité d'impulsions, une permutation et combinaison de positions d'impulsions, et une amplitude d'impulsion du symbole de modulation et des bits d'information, pour obtenir les bits d'information comprend:

démoduler, par l'extrémité de réception, une première partie de bits des bits d'information basée sur une relation de mappage entre la quantité d'impulsions du symbole de modulation et les bits d'information;
démoduler, par l'extrémité de réception, une deuxième partie de bits des bits d'information basée sur une relation de mappage entre la permutation et combinaison de positions d'impulsions du symbole de modulation et les bits d'information; et
démoduler, par l'extrémité de réception, une troisième partie de bits des bits d'information basée sur une relation de mappage entre l'amplitude d'impulsion du symbole de modulation et les bits d'information.

**7.** Procédé selon la revendication 6, dans lequel dans une première unité de ressources de domaine temporel, la quantité d'impulsions porte $\log_2 n$ bits des bits d'information, la permutation et combinaison de positions d'impulsions porte $\log_2 C_M^n$ bits des bits d'information, et l'amplitude d'impulsion porte $n \cdot \log_2 L$ bits des bits d'information; et
n est une quantité d'impulsions, du symbole de modulation, dans la une première unité de ressources de domaine temporel, L est un ordre de modulation d'amplitude supporté par chaque impulsion, M est une quantité de deuxièmes unités de ressources de domaine temporel comprises dans la une première unité de ressources de domaine temporel, et n, L, et M sont des entiers positifs.

**8.** Procédé selon la revendication 6 ou 7, dans lequel la quantité d'impulsions du symbole de modulation est la quantité d'impulsions dans la une première unité de ressources de domaine temporel;

la permutation et combinaison de positions d'impulsions du symbole de modulation est une permutation et combinaison de positions, d'une impulsion dans la une première unité de ressources de domaine temporel, dans la première unité de ressources de domaine temporel; et
l'amplitude d'impulsion du symbole de modulation est une amplitude de chaque impulsion dans la une première unité de ressources de domaine temporel.

**9.** Procédé selon la revendication 6 ou 7, dans lequel le procédé comprend en outre:
recevoir, par l'extrémité de réception, des informations d'indication, dans lequel les informations d'indication indiquent au moins l'un des éléments suivants:

la quantité de deuxièmes unités de ressources de domaine temporel dans la une première unité de ressources de domaine temporel;
une quantité maximale d'impulsions dans la une première unité de ressources de domaine temporel; et

l'ordre de modulation d'amplitude supporté par l'impulsion; et

le fait d'effectuer (402), par l'extrémité de réception, une démodulation basée sur une relation de mappage entre une quantité d'impulsions, une permutation et combinaison de positions d'impulsions, et une amplitude d'impulsion du symbole de modulation et des bits d'information comprend:

effectuer, par l'extrémité de réception basée sur les informations d'indication, une démodulation basée sur la relation de mappage entre la quantité d'impulsions, la permutation et combinaison de positions d'impulsions, et l'amplitude d'impulsion du symbole de modulation et les bits d'information.

10. Procédé selon la revendication 9, dans lequel les informations d'indication sont portées dans l'un des éléments suivants:

informations de contrôle de liaison descendante, DCI (downlink control information), informations de contrôle de liaison latérale, SCI (sidelink control information), et un préambule dans une trame physique Wi-Fi.

11. Extrémité d'émission, comprenant une mémoire, un processeur, et un programme ou des instructions stockés dans la mémoire et capables d'être exécutés sur le processeur, dans laquelle lorsque le programme ou les instructions sont exécutés par le processeur, les étapes du procédé de modulation de bits d'information selon l'une quelconque des revendications 1 à 5 sont mises en oeuvre.

12. Extrémité de réception, comprenant une mémoire, un processeur, et un programme ou des instructions stockés dans la mémoire et capables d'être exécutés sur le processeur, dans laquelle lorsque le programme ou les instructions sont exécutés par le processeur, les étapes du procédé de démodulation de bits d'information selon l'une quelconque des revendications 6 à 10 sont mises en œuvre.

13. Support de stockage lisible, comprenant un programme ou des instructions; qui, lorsqu'ils sont exécutés par un ordinateur, amènent l'ordinateur à effectuer les étapes du procédé de modulation de bits d'information selon l'une quelconque des revendications 1 à 5, ou qui, lorsqu'ils sont exécutés par un ordinateur, amènent l'ordinateur à effectuer les étapes du procédé de démodulation de bits d'information selon l'une quelconque des revendications 6 à 10.

Network side
device

11

Terminal

FIG. 1

```
                    Start

A transmit end modulates an information bit to a pulse quantity, a        201
pulse position permutation and combination, and a pulse amplitude,
     to generate a corresponding modulation symbol

     The transmit end transmits the modulation symbol                     202

                     End
```

FIG. 2

FIG. 3

Start

A receive end obtains a transmit signal, and obtains a modulation symbol based on the transmit signal — 401

The receive end performs demodulation based on a mapping relationship between a pulse quantity, a pulse position permutation and combination, and a pulse amplitude of the modulation symbol and an information bit, to obtain the information bit — 402

End

FIG. 4

— 500

Modulation module — 501

First sending module — 502

Information bit modulation apparatus

FIG. 5

600

First receiving module — 601

Demodulation module — 602

Information bit demodulation apparatus

FIG. 6

700

Communication device

701 — Processor ⟺ Memory — 702

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111224627
- CN 113422788 A
- US 2005175068 A1
- US 2014072063 A1
- WO 2006073371 A1